# EUROPEAN PATENT SPECIFICATION

(11) **EP 0 390 557 B1**
(45) Date of publication and mention of the grant of the patent: **13.08.1997**
(21) Application number: 90303357.9
(22) Date of filing: 29.03.1990
(51) Int. Cl.: H01M 10/40, H01M 2/02, H01M 6/12

(54) **Battery assembly and method for producing the same**
Batteriezusammenbau und Verfahren zu seiner Herstellung
Assemblage de batterie et procédé se sa fabrication

(30) Priority: 30.03.1989 US 331334
(43) Date of publication of application: 03.10.1990
(73) Proprietor: MHB JOINT VENTURE, Miamisburg Ohio 45342 (US)
(72) Inventor: Austin, Robert A., Dayton, Ohio 45429 (US); Fauteux, Denis, Centerville, Ohio 45459 (US)
(74) Representative: Deans, Michael John Percy

(56) References cited:
- DE-A- 2 609 300
- US-A- 2 870 235
- US-A- 3 375 136
- Research Disclosure 28826 ( SHACKLE D. ) 10 April l988
- PATENT ABSTRACTS OF JAPAN vol. 9, no. 251 (E-348)(1974) 8 October 1985 & JP-A- 60 100 362 ( MATSUSHITA DENKI SANGYO )
- PATENT ABSTRACTS OF JAPAN vol. 11, no. 36 (E-477)(2483) 3 February 1987 & JP-A-61 206 159 ( MATSUSHITA ELECTRIC IND )

## Description

The present invention relates to the manufacture of battery assemblies.

Presently there is a high level of interest in industry in designing thin layer solid state batteries, particularly lithium anode cells. These batteries include a lithium anode, a transition metal oxide polymer composite cathode, and a solid or liquid electrolyte which includes a dissolved lithium salt. Examples of such batteries are set forth in U.S. Patents 4,303,748 to Armand, 4,589,197 to North, and 4,228,226 to Christiansen, in our European Patent Application No. 89308770 (Publication No. EP-A-0357399 and in our European Patent Application No. 88310179.2 (Publication No. EP-A-0318161).

In designing such batteries one seeks to make them as thin and compact as possible while still satisfying market needs in terms of storage capacity, current density, shelf-life and the like.

We have found that in seeking to achieve this object, there is a problem in that some of the components are very hygroscopic and can absorb water and gasses which can ruin the battery in less than a few hours. Additional problems of accessing current from the battery arise if we seek to seal the components of the battery. Batteries also need to withstand the rigours of transportation, insertion into and use in products to prove commercial.

Some attempt has been made in the art to address such problems, but with only limited success. For example, U.S. Patent No. 4,502,903, teaches the construction for a lithium anode cell of the anode and cathode assemblies prior to sealing in a controlled atmosphere that is relatively inert to lithium and free of water, e.g., in dry air at a relative humidity of not more than 1 to 2 percent. This patent also teaches sealing of the edges of the battery unit under vacuum by heat and pressure.

In relation to a different type of cell, namely a LeClanché cell, U.S. Patent No. 4,756,717, teaches the sealing of the battery component edges, under vacuum with the aid of heat and pressure. The sealed battery is assembled on a card stock base and is overwrapped with a layer of inert, chemically stable material which serves primarily to prevent mechanical interference with underlying components during the early stages of construction of the battery. At a later stage of construction, this overwrap layer is sealed under a vacuum using heat and pressure. Examples of overwrapping materials include polyethylene, paper, glassine and paper-foil laminates.

Patents Abstracts of Japan Vol. 9 No. 36 (E-477)(2483) discloses a lead acid battery in which a plate is wrapped in a container at least one side of which is made of a multilayer comprising a metal foil with resin based polymeric film. Patent Abstracts of Japan Vol. 11 No. 251 (E-348)(1974) discloses a laminar battery wrapped in a sheath of resin film having a metal film on the inner surface thereof.

Although the above described provide some success in overcoming problems in relation to the specific cells concerned, they are deficient with respect to nonaqueous cells as they provide limited protection against environmental contamination, particularly att the areas of sealing. Accordingly, there remains a need in the art for a battery which is stable for extended periods of time and is resistant to mechanical shock or water or air degradation. The present invention has arisen from our work seeking to achieve this.

The term "battery", as used hereinbelow, can include a single cell, or a plurality of cells connected in either series or parallel fashion to furnish electrical current. The term "cell" includes an anode layer, cathode layer, electrolyte layer, and a pair of electrically conductive terminals; or a plurality of these layers connected in bifaced, bi-polar, or other cell configuration designs known per se in the art.

In accordance with one aspect of the present invention, we provide a battery assembly comprising:
a laminar battery including an anode layer, a cathode layer, an ionically conductive electrolyte layer interposed between the anode layer and said cathode layer, said layers being assembled to form an electrical cell, and a pair of electrically conductive terminals in electrical contact with said anode layer and said cathode layer; and a multilayer protective sheet material enveloping said laminar battery; said multilayer sheet material being characterised in comprising a layer of an electrically insulating, adhesive, heat-sealable material; a second layer of an insulating and heat-sealable thermoplastic material; a third layer comprising an air and water occlusive impermeable metal foil; and an outer protective material layer; said multilayer sheet material being heat sealed at the periphery of said laminar battery and about said terminals to exclude air and moisture and said terminals extending from or being accessible through said protective sheet material for connection to a device to be powered by said laminar battery.

It is preferable that the laminar battery is a lithium thin cell battery. Further, the protective sheet material may take the form of any number of configurations. The material is typically a multi-layered material including one or more heat sealable polymeric layers and one or more moisture and gas impermeable layers and one or more outer protective polymer layers. The outer protective polymer layer or layers will also function to cover or fill. any microscopic holes that may exist in the moisture and gas impermeable layer providing a greater than expected air and water occlusion capability. Alternatively, the protective sheet material may consist of a single layer as opposed to a multilayered material if the single layered material is able to provide all of the functions required of the multilayered film.

In a second and alternative aspect thereof, the invention provides a method for producing a battery assembly as defined above characterised in comprising the steps of:
inserting a laminar battery having an anode layer, an ionically conductive electrolyte layer, a cathode layer and a pair of electrically conductive terminals in electrical contact with said anode layer and said cathode layer between one or more sheets of a multilayer protective sheet material; and sealing said protective sheet material with heat and pressure around said laminar battery such that external access to said pair of electrically conductive terminals is provided; said protective sheet material functioning to prevent water and air from contacting said battery.

The embodiments of our battery assembly described in detail below which include a laminar thin cell battery are relatively less susceptible to degradation from water, air and physical shock and have a relatively extended shelf life.

The invention is hereinafter more particularly described by way of example only with reference to the accompanying drawings, in which:-
Fig. 1 is a perspective view of an embodiment of battery assembly in accordance with the present invention, showing a laminar thin cell battery in phantom enveloped by a heat-sealed moisture impermeable multilayered sheet material;
Fig. 2 is an exploded perspective view of a laminar thin cell battery which may be used in practice of the present invention;
Figs. 3(a)-(b) show one method for producing an alternative laminar battery assembly;
Fig. 4 is a cross-sectional schematic elevational view of the battery of Fig. 3 inserted into a protective material; and
Fig. 5 is an alternative battery assembly in accordance with the present invention.

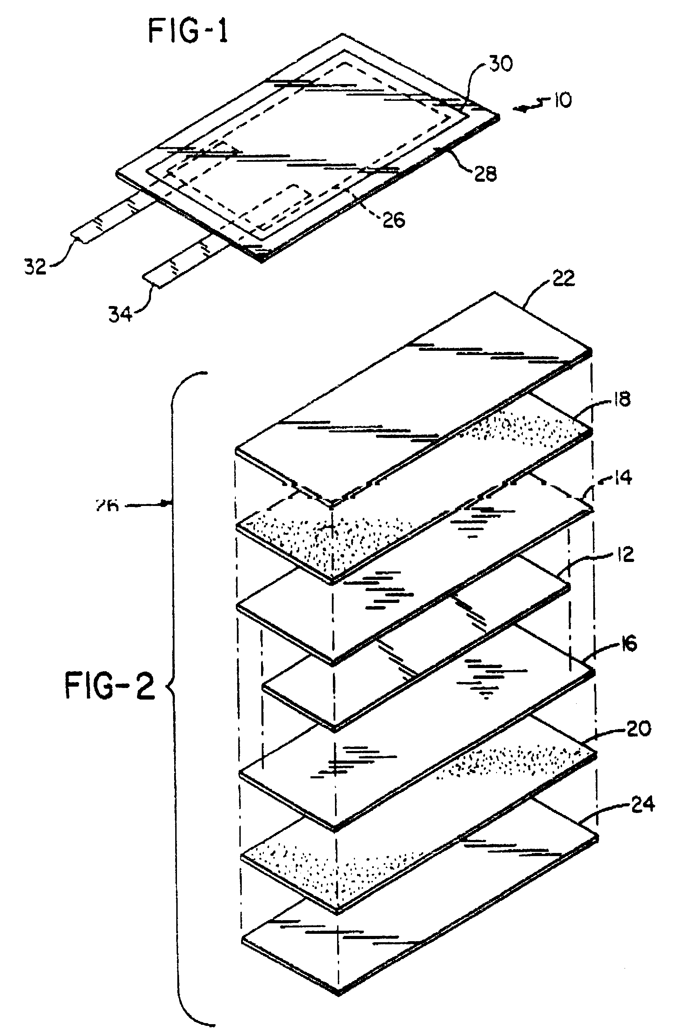

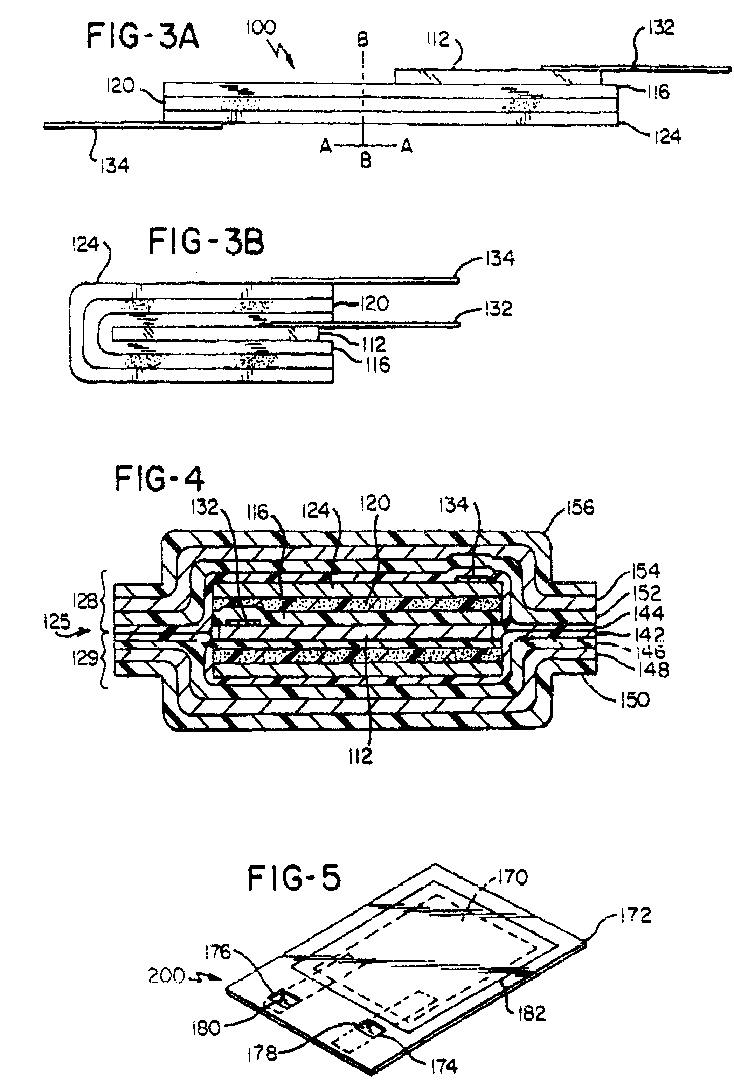

As illustrated in Fig. 1, a battery assembly 10, includes a thin cell laminar battery 26, shown in phantom, and is enveloped by a multilayered air and water occlusive protective sheet film material 28 which is heat sealed around its periphery 30. Connected to battery 26 are electrodes 32 and 34, which, as will be discussed in greater detail with respect fo Fig. 4, are respectively electrically connected to the anode and cathode of battery 26.

While battery assemblies in accordance with this invention may be of any desired electrochemical type, such as nickel cadmium, nickel hydroxide, LeClanché, or lead acid, for purposes of illustration and in accordance with a preferred embodiment, the battery is of the lithium anode type.

Laminar thin-cell batteries containing lithium anodes are known to the art, and those skilled in the art will appreciate that the laminar batteries can include a single cell, or a plurality of cells. Furthermore, the cells also can include various constructions such as bifaced or bipolar cell designs. Other examples of cell constructions include a jelly roll or Swiss roll design or a fan folded laminate strip design, both of which are illustrated in our aforementioned European Patent Application 84308770, the disclosure of which is to be regarded as hereby incorporated by reference.

Referring to Fig. 2, battery 26 is a cell laminate which includes an anode 12, first and second layers of an ionically conductive electrolyte 14, 16 which contact anode 12 on opposite sides respectively, and first and second cathode layers 18, 20 which contact the sides of electrolyte 14 and 16 which are not in contact with anode layer 12. Current collectors 22 and 24 respectively contact the sides of cathode layers 18 and 20 which are not in contact with electrolyte layers 14 and 16. The laminate shown in Fig. 2 is actually a bi-faced structure to maximize the use of anode 12.

The materials used for forming the different layers of battery are known per se in the art. For example, in one preferred embodiment, battery 26 comprises a portion of a secondary cell having an alkali metal foil anode 12 having a typical thickness of about 100-150 microns, the ionically conducting polymeric electrolyte layer 14 and 16 containing an ionizable alkali metal salt having a typical thickness of about 10 to 75 microns, cathode layers 18 and 20 including a finely divided transition metal oxide having a typical thickness of about 50 to 100 microns, and current collectors 22 and 24 which typically take the form of metal foils having a typical thickness of about 5 to 25 microns.

In a particularly effective embodiment, anode 12 comprises a lithium foil, electrolyte layers 14 and 16 comprise a radiation polymerizable compound, the cathode layers 18 and 20 comprise a composite of finely divided vanadium oxide (V₆O₁₃) carbon black or an electronically conductive polymer and a solid electrolyte material, and the cathode current collecting layers 22 and 24, comprise nickel, stainless steel, aluminum foils, metal coated polymers or electrically conductive polymeric materials such as a thin film of polyethylene terephthalate having electrodeposited thereon a layer of nickel metal.

More specifically, a typical anode material 12 is lithium foil, an alloy of lithium, or lithium coated foil such as nickel or copper foil having a layer of lithium deposited on its front or front and back surfaces. Lithium is preferred because it is very electropositive, passivates and is light in weight. When using lithium materials as anode layers to produce a laminar battery because of their high reactivity, it is necessary to maintain the lithium materials in a water and air free environment to prevent any undesirable chemical reaction from occurring.

Electrolyte layers 14 and 16, which are ionically conductive in nature, may be formed by preparing a mixture of a liquid monomeric or prepolymeric radiation polymerizable compound, a radiation inert ionically conducting liquid, and an ionizable alkali metal salt. The alkali metal salt is preferably comprised of a lithium salt, such as LiCF₃SO₃, LiAsF₆, LiC10₄, LiBr, LiI, LiBO₄ or LiPF₆. Radiation inert ionically conductive liquids are preferably bi-polar aprotic solvents and include propylene carbonate, γ -butryrolactone, dimethoxyethane, 1,3-dioxolane and 2-methyl-tetrahydrofuran. Radiation polymerizable compounds may be obtained by reacting a polyethylene glycol with acrylic or methacrylic acid. Other examples include acrylated epoxies, e.g., bisphenol A epoxy diacrylate, polyethylene acrylates, copolymers of glycidyl ethers and acrylates or a vinyl compound such as N-vinylpyrrolidone. The monomers which are selected do not substantially adversely react with the anodic metal after polymerization, as the anodic metal tends to be highly reactive. Other electrolyte materials which are not radiation curable may also be used such as solid electrolytes or electrolytes comprising a solid solution of an alkali metal salt in a polymeric matrix such as LiC10₄/PEO electrolytes.

The cathode layer comprises a metal oxide intercalation compound, an electrically conductive material such as carbon or metal particles, and an electrolyte material.

While V₆O₁₃ is the preferred active material for cathode layers 18 and 20, the active cathode component may alternatively include metal chalcogenides such as NbSe₃, V₂O₅, MnO₂, TiS₂, MoO₂, MoS₃, Cr₃O₆, LiₓV₃O₈, V₃O₈, VS₂, NbSe₂, FeOCl, CrOBr, TiNCl, ZrNCl, HfNBr, NiS₂, FeS₂, FeS, NiS, NiS₃, WO₂, or electronically conducting organic polymers such as polypyrrole and polyacetylene.

Other appropriate materials for the cathode current collecting layers 22 and 24, besides metal foils are conductive metals, conductive polymers, metal coated polymers, screens, grids, foamed metals and the like.

The battery is produced by laminating the respective layers together to form a unitary structure. The lamination process may include coating the cathode layers 18, 20 and the electrolyte layers 14, 16 onto the cathode current collecting layers 22 and 24 by doctor blade continuous casting, solvent evaporation technique, extrusion or other coating methods.

Although battery 26 is referred to as cell laminate, it should be noted that there are in fact two cells in the strict sense of the term, each having a cathode in an ion exchange relation with a commonly shared anode. Where the anode material is lithium foil, a substantial economic savings is realized when the lithium foil is commonly shared by dual electrolyte and cathode layers, although those skilled in the art will appreciate that the cell could be constructed with a single anode layer in an ion exchange relation with a single cathode layer if desired. The electrochemical cell shown in Fig. 2 will function as a single cell if the two cathode layers 20 and 18 are always joined by a single cathode current collecting substrate or are otherwise joined electrically.

Figs. 3(a) and 3(b) show the steps for manufacturing an alternative battery similar to that shown in Fig. 2.

Referring to Fig. 3(a), laminate assembly 100 includes current collecting substrate 124, which is overcoated with a layer of cathode material 120, which in turn is overcoated with a layer of electrolyte material 116. Cathode 120 and electrolyte compositions 116, if polymerizable, are then partially or totally cured by heat or exposure to radiation. If they are solvent based compositions, they are set by drying.

Lithium anode 112 is placed onto approximately one half of electrolyte 116. The length of lithium anode 112 is less than one half of the length of electrolyte 116 to enable electrolyte 116 to be folded over anode 112 as will be discussed with respect to Fig. 3(b). Electrically conductive terminal 132 is then placed onto anode 112. Terminal 132 is preferably a flat metal or metal wire. Suitable materials include copper, nickel, other conductive metals, conductive polymers and metal coated polymers. Where terminal 132 is copper, a strong bond is formed between terminal 132 and the lithium anode 112 and no adhesive is required to adhere the two elements together.

As shown in Fig. 3(b), the laminate assembly 100 is folded longitudinally upon itself along axis A-A to cause electrolyte 116 to surround anode layer 112. Anode layer 112, should have a smaller length than the length of one half of electrolyte layer 116 to ensure that the anode layer 112 does not contact cathode layer 120. Alternatively, instead of folding laminate assembly 100 longitudinally along axis A-A, assembly 100 could be cut along line B-B, or originally fashioned in the two such similar sections, and the two sections placed one upon the other to form an assembly very similar to that of Fig. 3B so long as the current collector layer 124 is made electrically continuous between its upper and lower halves to utilize the electrical energy of both the upper and lower cells.

When folded along axis A-A, despite retaining flexibility, there may exist some deterioration in the integrity of the layers at the fold line. This will not affect the operation of the cell. Even if the layers do not remain continuous at or about the fold line, the cell will continue to function, as it is in essence a dual cell design comprising an upper cell and a lower cell which share a common anode. As indicated above, as long as the current collector layer 124, links the upper and lower cathode layers 120, both the upper and lower cells will function even if there is some degradation of the electrolyte layer 116 and/or cathode layer 120, at or about the fold line.

Still referring to Fig. 3(b), a second terminal 134 is attached at one end to the outside of cathode current collecting layer 124 by any means known in the art such as applying electrically conductive adhesives, soldering or spot welding. Electrode 134 is of a length sufficient to permit the end not attached to protrude from beyond cathode current collecting layer 124. Electrode 134 is made from the same materials as electrode 132.

The cell laminate is then pressed or rolled together to assure uninterrupted contact between the layers, and taken together constitutes a battery collectively referred to as Device A. Where cathode 120 and electrolyte compositions 116 are polymerizable but have been only partially cured, the compositions will retain flexibility to permit folding with minimal deterioration at or about the fold line. Additionally, the partially cured cathode 120 and electrolyte 116 layers will also exhibit a tackiness that will cause the layers to adhere to one another and to anode layer 112. This can additionally provide a more intimate contact between the layers. The partially cured polymerizable components may then be completely cured.

The cathode current collector layer 124 may be designed to extend on the two parallel sides adjacent and perpendicular to the fold line beyond the cathode material layer 120 thereon, so that a bead of adhesive material may be applied at or near the edge of the perimeter of the interior surface of cathode current collecting layer 124. In this manner, when laminate assembly 100 is folded onto itself, the bead of adhesive will assist in securing assembly 100 together until it is ultimately enveloped by a heat-sealed moisture impermeable multilayered film.

Additionally, the individual layers of laminate assembly 100 may be optionally slit at or about the fold to assist in maintaining laminate assembly 100 as a unitary structure by reducing its tendency to separate at the fold.

Device A is not completely resistant to environmental attack. This is because cathode current collector 124 typically contains interstitial apertures having diameters of 10 microns or more through which atmospheric contaminants, primarily air and water, may enter and destroy device A. We insert device A into a protective material and seal it as illustrated in Fig. 4.

Fig. 4 shows a completed laminar battery assembly designated by element 180. Assembly 180 includes laminar battery device A, which is enveloped in a heat sealed moisture impermeable multilayered material represented by elements 128 and 129 except for electrodes 132 and 134, which slightly protrude from beyond material 128 and 129 to enable connection of the assembly to an external device.

To manufacture the assembly shown in Fig. 4, while maintaining an oxygen and moisture-free environment, device A is placed between two sheets of the multilayered material 128 and 129 so that the sheets of material 128 and 129 completely surround device 100 except for electrodes 132 and 134, which protrude from beyond sheets 128 and 129. Each of the four edges of the respective sheets of material are then heat sealed to fuse the edges of the respective materials to each other.

Sealing is accomplished by utilizing a Multivac Vacuum Packing Machine from Sepp. Haggenmueller, KG Allgau, W. Germany, which operates by utilizing heated platens which are maintained at sufficient heat and pressure to melt and seal the polymeric edges which envelop the battery device. For example a temperature of 100°C to 200°C at a pressure of 20-40 psi (1.38 - 2.76 × 10⁵N/m²) is typically used.

In practice, each pair of respective edges desired to be sealed together are inserted between the two heated platens and the sealing apparatus is actuated to cause the platens to move towards each other until the edges to be sealed are in intimate contact. Pressure and heat are applied to the edges for a sufficient time period ranging from about 1 second to about 5 seconds. The sealing procedure is repeated for each of the other three pairs of edges to be sealed to produce an assembly such as shown in Figs. 1 and 4. Alternatively, up to all sides can be sealed at once. Particular care must be utilized when sealing the edges containing electrodes 132 and 134 to prevent them from inadvertently breaking off during the sealing process. However, a sufficient pressure must be applied to the edges to seal around the electrodes to ensure an air and water impermeable seal.

A further feature is that the sealing operation be conducted in a vacuum atmosphere having a pressure as low as possible, i.e. 4 to 40 mm Hg. The sealing under a vacuum accomplishes several purposes. When the sealing operation has been completed, the vacuum enables the multilayered material to tightly adhere to the laminar cell to prevent the cell from moving within the sealed enclosure and to prevent delamination of the component layers. As a result, the battery assembly is much more resistant to physical damage caused during shipment and transportation. Further, the tight adhesion of the multilayered material to the cell enables the surface area of the battery to be maintained in a minimal volume. Accordingly, this enables the production of a small, thin battery.

The primary purpose of multilayered material is to effectively envelop device A and to protect device A from oxygen or moisture. An example of one material suitable for use is shown in Fig. 4. Multilayered film materials 128 and 129, having an overall thickness of approximately 100 microns, include a first inner insulating, adhesive, heat-sealable layer 142 and 144; a second thermoplastic layer 146 and 152; a third layer 148 and 154, consisting of an air and water occlusive metal foil; and a fourth outer protective layer 150 and 156, consisting essentially of a polyester polymer, i.e. polyethylene terephthalate. Primer and/or adhesive films required to bond one layer to another, not pictured, are utilized when necessary.

The first inner thermoplastic layer 142 and 144 has an approximate thickness of 25 to 50 microns, and functions as an electronic insulator, a heat-sealable material and as an adhesive between dissimilar surfaces. Electrical insulating properties are required in this first inner layer 142 and 144, because as electrodes 132 and 134 extend from device A a direct short would be produced across the metal foil layer 148 and 154 if both electrodes were permitted to directly contact metal foil layer 148 and 154.

This first inner layer 142 and 144 must also be sealable upon the application of pressure and heat, at sufficiently low temperatures and pressures so as not to degrade device A. When the sealing operation is performed, first inner layer 142 and 144 becomes fusible to enable upper and lower surfaces 128 and 129 of the multilayered film to be sealed together. On the edge from which electrodes 132 and 134 will protrude, the heat-sealable material must flow around the electrodes to achieve a continuous seal between the upper and lower surfaces of the multilayered film 128 and 129 and the electrodes.

Additionally, first inner layer 142 and 144 must also possess an adhesive quality that will enable it to bind together the dissimilar surfaces consisting of electrodes 132 and 134, and the second thermoplastic layer 146 and 152, (or between electrodes 132 and 134 and the third metal foil layer 148 and 154, in the event that a second thermoplastic layer 146 and 152 is not included.)

Examples of suitable materials for the first inner layer include a copolymer of ethylene and acrylic acid, Surlyn (an extrudable ionomer resin which is defined as a metal salt of an ethylene/organic acid copolymer available from DuPont Company of Wilmington, Delaware, hereinafter designated "Surlyn"), and any other suitable materials known in the art. Ethylene and acrylic acid copolymers and Surlyn are preferred because each exhibits the necessary insulating, heat-sealing and adhesive properties discussed above. The amount of heat and pressure required to seal the multilayered film 128 and 129, wherein the first insulating layer is ethylene acrylic acid will vary depending upon the chosen thickness and composition of all layers in the multilayered film 128 and 129. However, as a general approximation temperatures in the range of 100-200°C are required, as well as pressures of approximately 20-40 psi (1.38 - 2.76 x 10⁵ N/m²) for a time period of approximately 1-5 seconds where the ethylene and acrylic acid copolymer is about 25 microns thick.

Caution must be exercised with the choice of composition of the first inner layer 142 and 144, and with the amount of heat and pressure to be applied. The first inner layer 142 and 144 must be permitted to flow, but not to achieve so high a degree of liquidity that the composition will escape from the area wherein sealing is desired, or that will permit the electrodes 132 and 134 to traverse through the first inner layer 142 and 144 and the second thermoplastic layer 146 and 152 to cause the terminals to simultaneously contact the metal foil layer 148 and 154 and create a short.

From Fig. 4, it will be obvious to those skilled in the art that the first inner layer 142 and 144 needs to exhibit the ability to act as an adhesive between dissimilar surfaces only along the edge from which the electrodes 132 and 134 protrude, and specifically only in the area bounded by the electrodes 132 and 134. Therefore, in another embodiment of the present invention, the first inner layer may be limited to the area at or about the electrodes. In still another embodiment, the material which acts as an adhesive may be coated, primed, or otherwise deposited on electrodes 132 and 134. In either embodiment, the additional layer provides both insulating and heat sealing capabilities throughout the remainder of the inner surface of the multilayered film.

Where the first inner layer 142 and 144 provides all necessary insulating, heat sealing and adhesive properties, the second thermoplastic layer may be omitted. However, where the first inner layer 142 and 144 is provided only in or about the area bounded by electrodes 132 and 134, the second thermoplastic layer 148 and 154 is required in order to provide both insulating and heat-sealing abilities throughout the remainder of the inner surface of the multilayered film. Even where the first inner layer 142 and 144 provides all needed properties, additional benefits are derived from the inclusion of the second thermoplastic layer 146 and 152 in that additional mechanical and chemical protection is provided and in that this type of multilayered film is commercially available, such as product I.D. #KSP-150-IMB from Kapak Corporation of Minneapolis, Minnesota which, while lacking the required adhesive properties described above, does provide insulating and heat-sealing capability.

Still referring to Fig. 4, second thermoplastic layer 146 and 152 is utilized to exhibit these properties. Suitable second thermoplastic layer materials include polyethylene and polypropylene.

It is the purpose of the third layer 148 and 154 and fourth outer protective layer 150 and 156 to provide a barrier for excluding air and water from the battery and to provide rigidity to protect the battery during physical handling.

Where the third metal layer contains small (approximately 10 micron) holes which permit air and water to contact the battery, the fourth outer polymeric protective layer will cover or plug those microscopic holes, providing additional air and water occlusion protection. In some cases two metal layers separated by a bonding film may be needed to provide sufficient air and water occlusion.

In the preferred embodiment, the third layer is preferably a metal such as aluminum foil and the fourth outer protective layer is a polymeric material such as polyethylene terephthalate.

Protective sheet material comprised of multilayered films, is available commercially. For example, product number 41748U30 available from Bell Fibre Incorporated, is a five layered film consisting of a first layer of Surlyn, which is bonded to a second layer of polyethylene which is bonded to a third layer of aluminum foil which is bonded to a fourth layer of polyethylene which is bonded to a fifth layer of polyester. Also available from Bell Fibre, is product number 41750U30 which is a five layered material comprising a first layer of Surlyn film which is bonded to a second layer of Surlyn which is bonded to a third layer of aluminum foil which is bonded to a fourth layer of polyethylene which is bonded to a fifth layer of polyester. Another example of protective sheet material suitable for use with the present invention is available from James River Flexible Packaging Incorporated under the product name Standard Flex Guard. The James River product is a six layered film material comprised of a first layer which is a copolymer of ethylene and acrylic acid, which is bonded to a second layer of polyethylene or polypropylene which is bonded to a third layer of the copolymer of ethylene and acrylic acid, which is bonded to a fourth layer of aluminum foil which is bonded to a fifth layer of the copolymer of ethylene and acrylic acid, which is bonded to a sixth layer of nylon (Saran).

These commercial products are examples of the types of protective sheet materials that may be successfully used in practice of the present invention. Any protective sheet material which exhibits the ability to be heat sealable, air and water occlusive, and resistant to physical and environmental degradation will satisfy the requirements for practical use in assemblies according to the present invention.

Having illustrated electrodes 32 and 34 projecting from assembly 10 in Fig. 1, those skilled in the art will appreciate that numerous electrode configurations are possible as long as a seal of the multilayered film 128 and 129 is maintained in or about the area where the electrodes are accessible from the multilayered film.

One such alternative configuration is illustrated in Fig. 5.

Fig. 5 shows assembly 200, including battery 170, shown in phantom, electrodes 178 and 180, in a heat and vacuum sealed moisture impermeable multilayered film 172, which is sealed along the periphery 182. Apertures 174 and 176 have been provided in the upper surface of the multilayered film 172, either before or after sealing, to expose electrodes 178 and 180.

Assembly 200 exhibits the advantages that as electrodes 178 and 180 are nearly completely enveloped by film 172, the electrodes will have a high degree of protection from physical abuse and are not exposed along the same line at or near the point of sealing. Having a staggered orientation at or near the point of sealing will reduce the possibility of any accidental electrical contact between electrodes 178 and 180.

## Claims

1. A battery assembly comprising:
a laminar battery including an anode layer, a cathode layer, an ionically conductive electrolyte layer interposed between the anode layer and said cathode layer, said layers being assembled to form an electrical cell, and a pair of electrically conductive terminals in electrical contact with said anode layer and said cathode layer; and a multilayer protective sheet material enveloping said laminar battery; said multilayer sheet material being characterised in comprising a layer of an electrically insulating, adhesive, heat-sealable material; a second layer of an insulating and heat-sealable thermoplastic material; a third layer comprising an air and water occlusive impermeable metal foil; and an outer protective material layer; said multilayer sheet material being heat sealed at the periphery of said laminar battery and about said terminals to exclude air and moisture and said terminals extending from or being accessible through said protective sheet material for connection to a device to be powered by said laminar battery.

2. A battery assembly according to Claim 1, further characterised in that said heat sealing occurs under a vacuum.

3. A battery assembly according to Claim 1 or Claim 2, further characterised in that said anode layer comprises lithium foil or a metal foil coated with a layer of lithium, or an alloy of lithium.

4. A battery assembly according to any preceding claim, further characterised in that said battery is a solid state lithium cell.

5. A battery assembly according to any preceding claim, further characterised in that said ionically conductive electrolyte layer includes an ionizable alkali metal salt selected from LiCF₃SO₃, LiAsF₆, LiC1O₄, LiBr, LiI, LiBO₄ and LiPF₆.

6. A battery assembly according to any preceding claim, further characterised in that said cathode layer comprises an electrically conductive material comprising carbon or metal particles, an electrolyte material, and an intercalation compound selected from V₆O₁₃, MoO₂, MnO₂, V₂O₅, TiS₂, MoS₃, Cr₃O₆, LiₓV₃O₈ V₃O₈, VS₂, NiS₂, FeS₂, FeS, NiS WO₂ and electronically conducting organic polymers.

7. A battery assembly according to any preceding claim further characterised in that said electrically insulating adhesive, heat-sealable material comprises either a copolymer of ethylene and acrylic acid, or an ionomer resin which is a metal salt of an ethylene/organic acid copolymer.

8. A battery assembly according to any preceding claim, further characterised in that said battery comprises a single cell.

9. A battery assembly according to any of Claims 1 to 7, further characterised in that said battery comprises a plurality of cells.

10. A battery assembly according to any of Claims 1 to 7, further characterised in that said battery is of a bifaced or a bi-polar cell design.

11. A method for producing a battery assembly according to Claim 1 characterised in comprising the steps of: inserting said laminar battery having an anode layer, an ionically conductive electrolyte layer, a cathode layer and a pair of electrically conductive terminals in electrical contact with said anode layer and said cathode layer between one or more sheets of said multilayer protective sheet material; and sealing said protective sheet material with heat and pressure around said laminar battery such that external access to said pair of electrically conductive terminals is provided; said protective sheet material functioning to prevent water and air from contacting said battery.

12. A method according to Claim 11, further characterised in that said insertion step and said sealing step are carried out under a vacuum.

13. A method according to Claims 11 or 12, further characterised in that said battery includes a lithium anode, an anode comprised of an alloy of lithium or a metal foil coated with a layer of lithium.

14. A method according to any of Claims 11 to 13 further characterised in that said electrically insulating adhesive, heat-sealable material comprises either a copolymer of ethylene and acrylic acid, or an ionomer resin which is characterised as a metal sale of ethylene/organic acid copolymer.

15. A method according to any of Claims 11 to 14, further characterised in that said battery comprises a single cell.

16. A method according to any of Claims 11 to 14, further characterised in that said battery comprises a plurality of cells.

17. A method according to any of Claims 11 to 14, further characterised in that said battery is of a bifaced or a bi-polar cell design.

## Patentansprüche

1. Batterieaufbau mit einer schichtförmigen Batterie, die aufweist: eine Anodenlage, eine Kathodenlage, eine ionenleitende Elektrolytlage, die zwischen der Anodenlage und der Kathodenlage angeordnet ist, wobei die Lagen so zusammengesetzt sind, um ein elektrisches Element zu bilden, und ein Paar elektrisch leitender Anschlüsse in elektrischen Kontakt mit der Anodenlage und der Kathodenlage; und ein mehrlagiges Schutzplattenmaterial, das die schichtförmige Batterie umhüllt; wobei das mehrlagige Plattenmaterial dadurch gekennzeichnet ist, daß es aufweist: eine Lage eines elektrisch isolierenden, klebenden Heißsiegelmaterials; eine zweite Lage eines Isolations- und Heißsiegel-Thermoplastmaterials; eine dritte Lage, die eine Luft und Wasser abschließende, undurchlässige Metallfolie aufweist; und eine äußere Schutzmateriallage; wobei das mehrlagige Plattenmaterial am Umfang der schichtförmigen Batterie und um die Anschlüsse heißgesiegelt ist, um Luft und Feuchtigkeit auszuschließen, und sich die Anschlüsse zur Verbindung mit einem Gerät, das durch die schichtförmige Batterie versorgt werden soll, aus dem Schutzplattenmaterial erstrecken oder durch es zugänglich sind.

2. Batterieaufbau nach Anspruch 1, dadurch gekennzeichnet, daß das Heißsiegeln unter Vakuum stattfindet.

3. Batterieaufbau nach Anspruch 1 oder Anspruch 2, dadurch gekennzeichnet, daß die Anodenlage eine Lithiumfolie oder eine Metallfolie aufweist, die mit einer Lage aus Lithium oder einer Legierung aus Lithium beschichtet ist.

4. Batterieaufbau nach einem der vorhergehenden Ansprüche, dadurch gekennzeichnet, daß die Batterie ein Festkörper-Lithiumelement ist.

5. Batterieaufbau nach einem der vorhergehenden Ansprüche, dadurch gekennzeichnet, daß die ionenleitende Elektrolytlage ein ionisierbares Alkalimetallsalz ausgewählt aus LiCF₃SO₃, LiASF₆, LiClO₄, LiBr, LiI, LiBO₄ und LiPF₆ ist.

6. Batterieaufbau nach einem der vorhergehenden Ansprüche, dadurch gekennzeichnet, daß die Kathodenlage ein elektrisch leitendes Material, das Kohlenstoff- oder Metallpartikel aufweist, ein Elektrolytmaterial und eine Einlagemischung ausgewählt aus V₆O₁₃, MoO₂, MnO₂ V₂O₅, TiS₂, MoS₃, Cr₃O₆, LiₓV₃O₈ V₃O₈, VS₂, NiS₂, FeS₂, FeS, NiS WO₂ und elektronisch leitenden organischen Polymeren aufweist.

7. Batterieaufbau nach einem der vorhergehenden Ansprüche, dadurch gekennzeichnet, daß das elektrisch isolierende, klebende Heißsiegelmaterial entweder ein Copolymer aus Ethylen und Acrylsäure oder ein Ionomerkunstharz aufweist, das ein Metallsalz eines Ethylen/ organische Säure-Copolymers ist.

8. Batterieaufbau nach einem der vorhergehenden Ansprüche, dadurch gekennzeichnet, daß die Batterie ein einziges Element aufweist.

9. Batterieaufbau nach einem der Ansprüche 1 bis 7, dadurch gekennzeichnet, daß die Batterie mehrere Elemente aufweist.

10. Batterieaufbau nach einem der Ansprüche 1 bis 7, dadurch gekennzeichnet, daß die Batterie von einer zweiflächigen oder einer bipolaren Gestaltung ist.

11. Verfahren zur Herstellung eines Batterieaufbaus nach Anspruch 1, dadurch gekennzeichnet, daß es die Schritte aufweist: Einfügen der schichtförmigen Batterie, die eine Anodenlage, eine ionenleitende Elektrolytlage, eine Kathodenlage und ein Paar elektrisch leitender Anschlüsse aufweist, die in elektrischen Kontakt mit der Anodenlage und der Kathodenlage sind, zwischen eine oder mehrere Platten des mehrlagigen Schutzplattenmaterials; und Versiegeln des Schutzplattenmaterials mit Wärme und Druck um die schichtförmige Batterie herum, so daß ein äußerer Zugang zu dem Paar elektrisch leitender Anschlüsse bereitgestellt wird; wobei das Schutzplattenmaterial dazu dient, Wasser und Luft daran zu hindern, mit der Batterie Kontakt aufzunehmen.

12. Verfahren nach Anspruch 11, dadurch gekennzeichnet, daß der Einfügeschritt und der Versiegelungsschritt unter Vakuum ausgeführt werden.

13. Verfahren nach Anspruch 11 oder 12, dadurch gekennzeichnet, daß die Batterie eine Lithiumanode, eine Anode, die eine Legierung aus Lithium aufweist, oder eine mit einer Lage aus Lithium beschichtete Metallfolie aufweist.

14. Verfahren nach einem der Ansprüche 11 bis 13, dadurch gekennzeichnet, daß das elektrisch isolierende, klebende Heißsiegelmaterial entweder ein Copolymer aus Ethylen und Acrylsäure, oder ein Ionomerkunstharz aufweist, das als ein Metallsalz eines Ethylen/organische Säure-Copolymers gekennzeichnet ist.

15. Verfahren nach einem der Ansprüche 11 bis 14, dadurch gekennzeichnet, daß die Batterie ein einziges Element aufweist.

16. Verfahren nach einem der Ansprüche 11 bis 14, dadurch gekennzeichnet, daß die Batterie mehrere Elemente aufweist.

17. Verfahren nach einem der Ansprüche 11 bis 14, dadurch gekennzeichnet, daß die Batterie von einer zweiflächigen oder einer bipolaren Element-Gestaltung ist.

## Revendications

1. Ensemble de batterie comportant:
une batterie feuilletée comprenant une couche formant anode, une couche formant cathode, une couche d'électrolyte ioniquement conductrice interposée entre la couche formant anode et ladite couche formant cathode, lesdites couches étant assemblées pour former une pile électrique, et une paire de bornes électriquement conductrices en contact électrique avec ladite couche formant anode et ladite couche formant cathode; et un matériau formant feuille de protection multicouches enveloppant ladite batterie lamellaire; ledit matériau formant feuille multicouches étant caractérisé en ce qu'il comprend une couche d'un matériau thermosoudable, adhésif et électriquement isolant; une deuxième couche d'un matériau thermoplastique thermosoudable et isolant; une troisième couche comprenant une feuille de métal imperméable, étanche à l'air et à l'eau; et une couche externe d'un matériau de protection; ledit matériau formant feuille multicouche étant thermosoudé au niveau de la périphérie de ladite batterie lamellaire et autour desdits bornes pour exclure l'air et l'humidité, et lesdites bornes s'étendant à partir dudit matériau formant feuille de protection ou étant accessible à travers ce dernier, en vue de sa connexion à un dispositif devant être alimenté par ladite batterie feuilletée.

2. Ensemble de batterie selon la revendication 1, caractérisé, en outre, en ce que ledit thermosoudage s'effectue sous vide.

3. Ensemble de batterie selon la revendication 1 ou la revendication 2, caractérisé, en outre, en ce que ladite couche formant anode comprend une feuille de lithium ou une feuille de métal revêtue d'une couche de lithium, ou un alliage de lithium.

4. Ensemble de batterie selon l'une quelconque des revendications précédentes, caractérisé en ce que ladite batterie est une pile au lithium à l'état solide.

5. Ensemble de batterie selon l'une quelconque des revendications précédentes, caractérisé, en outre, en ce que ladite couche formant électrolyte ioniquement conductrice comprend un sel de métal alcalin pouvant être ionisé sélectionné à partir du LiCF₃SO₃, LiAsF₆, LiClO₄, LiBr, LiI, LiBO₄ et LiPF₆.

6. Ensemble de batterie selon l'une quelconque des revendications précédentes, caractérisé, en outre, en ce que ladite couche formant cathode comprend un matériau électriquement conducteur comportant des particules de métal ou de carbone, un matériau formant électrolyte, et un composé d'insertion sélectionné parmi du V₆O₁₃, MoO₂, MnO₂, V₂O₅, TiS₂, MoS₃, Cr₃O₆, LiₓV₃O₈, V₃O₈, VS₂, NiS₂, FeS₂, FeS, NiSWO₂ et des polymères organiques électroniquement conducteurs.

7. Ensemble de batterie selon l'une quelconque des revendications précédentes, caractérisé, en outre, en ce que ledit matériau thermosoudable, adhésif et électriquement isolant comprend un copolymère d'éthylène et d'acide acrylique ou une résine ionomère qui est un sel de métal d'un copolymère d'éthylène/acide organique.

8. Ensemble de batterie selon l'une quelconque des revendications précédentes, caractérisé, en outre, en ce que ladite batterie comprend une seule pile.

9. Ensemble de batterie selon l'une quelconque des revendications 1 à 7, caractérisé, en outre, en ce que ladite batterie comprend une pluralité de piles.

10. Ensemble de batterie selon l'une quelconque des revendications 1 à 7, caractérisé, en outre, en ce que ladite batterie présente une conception de pile bipolaire ou à deux faces.

11. Procédé pour produire un ensemble de batterie selon la revendication 1, caractérisé en ce qu'il comprend les étapes consistant à : insérer ladite batterie feuilletée comportant une couche formant anode, une couche formant électrolyte ioniquement conductrice, une couche formant cathode et une paire de bornes électriquement conductrices en contact électrique avec ladite couche formant anode et ladite couche formant cathode entre une ou plusieurs feuilles dudit matériau formant feuille de protection multicouches; et souder ledit matériau formant feuille de protection sous l'action de la chaleur et de la pression autour de ladite batterie feuilletée de telle sorte qu'il soit possible d'accéder extérieurement à ladite paire de bornes électriquement conductrices ; ledit matériau formant feuille de protection fonctionnant de manière à éviter tout contact de ladite batterie avec l'eau et l'air.

12. Procédé selon la revendication 11, caractérisé, en outre, en ce que l'étape d'insertion et ladite étape de soudage sont effectuées sous vide.

13. Procédé selon les revendications 11 ou 12, caractérisé, en outre, en ce que ladite batterie comprend une anode de lithium, une anode composée d'un alliage de lithium ou une feuille de métal revêtue d'une couche de lithium.

14. Procédé selon l'une quelconque des revendications 11 à 13, caractérisé, en outre, en ce que ledit matériau thermosoudable, adhésif et électriquement conducteur comprend un copolymère d'éthylène et d'acide acrylique, ou une résine d'ionomère qui est caractérisée comme un sel de métal d'un copolymère d'éthylène/acide organique.

15. Procédé selon l'une quelconque des revendications 11 à 14, caractérisé, en outre, en ce que ladite batterie comprend une seule pile.

16. Procédé selon l'une quelconque des revendications 11 à 14, caractérisé, en outre, en ce que ladite batterie comprend une pluralité de piles.

17. Procédé selon l'une quelconque des revendications 11 à 14, caractérisé, en outre, en ce que ladite batterie présente une conception de piles bipolaire ou à deux faces.
